# FASCICULE DE BREVET EUROPEEN

(11) **EP 3 111 144 B1**
(45) Date de publication et mention de la délivrance du brevet: **22.07.2020**
(21) Numéro de dépôt: 15711253.3
(22) Date de dépôt: 24.02.2015
(51) Int. Cl.: A47J 36/32, H05B 6/06, F24C 7/08

(54) **SYSTÈME DE CHAUFFAGE PAR INDUCTION COMPRENANT UNE TABLE DE CUISSON COMMUNICANTE ET UN OU PLUSIEURS ARTICLES DE CUISSON COMMUNICANTS ET PROCÉDÉ METTANT EN OEUVRE UN TEL SYSTÈME**
INDUKTIONSHEIZUNGSSYSTEM MIT EINEM KOMMUNIKATIONSFÄHIGEN KOCHFELD UND EINEM ODER MEHREREN KOMMUNIKATIONSFÄHIGEN KOCHARTIKELN UND VERFAHREN ZUR DURCHFÜHRUNG EINES SOLCHEN SYSTEMS
INDUCTION HEATING SYSTEM COMPRISING A COMMUNICATING HOB AND ONE OR MORE COMMUNICATING COOKING ARTICLES AND METHOD IMPLEMENTING SUCH A SYSTEM

(30) Priorité: 28.02.2014 FR 1451640
(43) Date de publication de la demande: 04.01.2017
(73) Titulaire: SEB S.A., 69130 Ecully (FR)
(72) Inventeur: GHECHOUA, Karim, F-69800 Saint Priest (FR); GAILHARD, Thierry, F-69970 Chaponnay (FR); CUBIZOLLES, Serge, F-38780 Oytier Saint Oblas (FR)
(74) Mandataire: Soares, Luis Filipe
(86) Numéro de dépôt international: PCT/FR2015/050446
(87) Numéro de publication internationale: WO 2015/128578

(56) Documents cités:
- EP-A2- 0 098 491
- DE-A1-102009 000 273
- DE-A1-102009 003 105
- US-A- 5 746 114
- US-A1- 2008 079 392
- US-A1- 2010 147 832
- US-A1- 2012 000 903

## Description

L'invention concerne un système intelligent de cuisson constitué d'une table de cuisson comprenant des zones de chauffage et d'articles électroniques de cuisson qui communiquent avec la table de cuisson. L'invention concerne également un procédé de suivi des articles électroniques de cuisson sur les différentes zones de chauffage de la table de cuisson.

On connait le document US5746114 décrivant un système de cuisson comprenant d'une part une table de cuisson avec des zones différenciées de chauffe et d'autre part des articles de cuisson tels que casseroles, marmites, etc.

Le système décrit dans ce document est un système intelligent, c'est-à-dire qu'il permet de conserver la consigne de chauffe pour un article de cuisson en fonction des déplacements de celui-ci sur les différentes zones de chauffe de la table de cuisson et cela sans que l'utilisateur soit obligé de remettre une consigne de chauffe sur la nouvelle zone de chauffe occupée par l'article de cuisson.

Ainsi lorsqu'une consigne de chauffe est associée à un certain article de cuisson, et lors d'un déplacement de celui-ci d'une zone de chauffe à une autre, le système permet de suivre l'article de cuisson et d'alimenter la nouvelle zone de chauffe avec la consigne de chauffe préalablement définie.

Pour réaliser cette fonction le système comprend une communication entre la table de cuisson et l'article de cuisson. De façon plus précise, la communication est établie entre un module de communication intégré à l'article de cuisson et un module de communication intégré dans la table de cuisson. Dans le cas présent le module de communication de l'article de cuisson est alimenté par batterie.

Cette communication permet de transmettre des informations de la table de cuisson vers l'article de cuisson et inversement.

Afin de connaitre la température de l'article de cuisson, celui-ci comprend un capteur de température. L'article de cuisson peut donc communiquer sa température à la table de cuisson par le biais des modules de communication respectifs. Un contrôleur présent dans la table de cuisson est câblé à chaque zone de chauffe et permet de les identifier distinctement chacune.

Pour connaitre la présence ou le déplacement de l'article de cuisson d'une zone de chauffe à une autre, chaque zone de chauffe est équipée d'un détecteur de proximité ou de présence relié au contrôleur qui les identifie de façon unique.

Ainsi lorsqu'un article de cuisson est enlevé d'une certaine zone de chauffe le système en est informé et coupe l'alimentation. Si cet article de cuisson est positionné sur une autre zone de chauffe, le détecteur de proximité détecte une présence et le contrôleur interroge l'article de cuisson pour savoir quel article est présent dessus. Comme chaque article de cuisson est préalablement enregistré avec un identifiant unique, et que le contrôleur connait la consigne de chauffe, le système permet de réalimenter cette nouvelle zone de chauffe avec la bonne température de consigne.

Un article peut donc être déplacé d'une zone à l'autre sans que l'utilisateur soit obligé de ré-actionner une consigne de chauffe.

Le système ainsi décrit fonctionne lorsque la table est en présence d'un seul article de cuisson.

Ce document traite également le cas où plusieurs articles de cuisson sont positionnés en même temps sur la table de cuisson.

Ainsi lorsque plusieurs articles de cuisson sont utilisés et/ou déplacés en même temps, le contrôleur sonde chaque article de cuisson pour obtenir le code d'identification ou la température associés à chaque article de cuisson. En variante, chaque article de cuisson peut transmettre la température actuelle avec son code d'identification à des intervalles de temps définis. Les intervalles de temps peuvent être de quelques fractions de seconde, une ou plusieurs secondes ou encore quelques minutes etc. Dans cette approche, un multiplexeur est prévu pour séparer la transmission simultanée des informations des multiples articles de cuisson.

Cependant un tel système est coûteux et dans le cas de figure où plusieurs articles de cuisson sont positionnés sur la table de cuisson, le système décrit ne permet pas d'obtenir de manière fiable le nouvel emplacement de l'article de cuisson quand celui-ci a été déplacé. En effet la synchronisation entre les signaux reçus avec le foyer utilisé n'est pas fiable ni optimale avec l'utilisation d'un multiplexeur.

Le document US2012/0000903 A1 est également pertinent par rapport à l'invention.

Le but de l'invention est d'avoir un système peu onéreux et fiable pour pouvoir suivre le mouvement de différents articles de cuisson déplacés d'une zone de chauffe à une autre tout en permettant au système d'identifier les nouvelles zones de chauffe associées aux différents articles de cuisson et ceci de manière unique.

Afin de résoudre ce problème, l'invention concerne une table de cuisson comprenant :
- au moins deux zones de chauffage pour supporter un ou plusieurs articles électroniques de cuisson communicants qui communiquent par l'intermédiaire d'un module de communication ;
- une unité de contrôle reliée aux au moins deux zones de chauffage ;
- un dispositif de communication intégré à la table de cuisson.

Selon l'invention, l'unité de contrôle est activée de manière à alimenter consécutivement au moins deux des zones de chauffage pendant une durée T0 lorsque le dispositif de communication réceptionne un signal d'activation SA ou lorsque le dispositif de communication ne réceptionne plus un signal de confirmation SC émis par un des plusieurs articles électroniques de cuisson communicants.

Selon l'invention la durée T0 peut varier de quelques fractions de secondes à une durée infinie.

Selon l'invention les zones de chauffage sont identifiées de manière unique par l'unité de contrôle au moyen d'un identifiant unique.

Dans une variante de réalisation de la table de cuisson, chaque zone de chauffage comprend un capteur de présence d'un article électronique de cuisson communicant positionné sur ou à proximité immédiate de ladite zone de chauffage, et ce capteur de présence peut être un détecteur infrarouge, un capteur à effet Hall ou un détecteur capacitif relié à l'unité de contrôle de la table de cuisson. Ces capteurs de présence, lorsqu'ils détectent une variation, peuvent générer un signal d'activation SA.

Selon l'invention les zones de chauffage comprennent des bobines primaires et/ou des bobines secondaires.

Lorsqu'elles détectent une variation de charge les bobines primaires peuvent générer un signal d'activation SA.

Selon l'invention la table de cuisson comprend un afficheur et/ou un dispositif de contrôle qui permet de générer un signal d'activation SA.

Selon l'invention l'unité de contrôle est programmable à distance.

L'invention concerne également un article électronique de cuisson communicant adapté pour fonctionner avec une table de cuisson telle que précédemment décrite.

Selon l'invention l'article électronique de cuisson communicant comprend un dispositif de mesure d'un champ magnétique.

Selon l'invention l'article électronique de cuisson communicant comprend une unité de traitement du signal qui peut générer au moins un signal d'activation SA et/ou un signal de confirmation SC et/ou un signal de commande SCO.

Selon l'invention l'article électronique de cuisson communicant comprend un dispositif de mise sous tension de l'unité de traitement du signal et/ou du module de communication.

Selon l'invention au moins la mise sous tension de l'unité de traitement du signal et/ou du module de communication permet de générer un signal ponctuel d'activation SA.

Selon l'invention le signal de confirmation SC est généré lorsqu'au moins l'unité de traitement du signal et/ou le module de communication est sous tension et au moins le dispositif de mesure du champ magnétique détecte un champ magnétique proche.

Selon l'invention le signal de confirmation SC est émis de façon continue ou périodique tant que le dispositif de mesure du champ magnétique détecte un champ magnétique proche.

Selon l'invention l'article électronique de cuisson communicant comprend une unité de commande.

Selon l'invention l'article électronique de cuisson communicant est programmable sans fil et à distance.

L'invention concerne également un procédé pour mettre en œuvre une table de cuisson telle que décrit précédemment et au moins un article électronique de cuisson communicant tel que décrit précédemment.

Selon l'invention le procédé comprend au moins les étapes suivantes :
- Une étape de mise sous tension de la table de cuisson ;
- Une étape de mise sous tension d'au moins un article électronique de cuisson communicant ;
- Une étape de génération d'un signal d'activation SA. Ce signal d'activation SA active l'unité de contrôle ;
- Une étape de scrutation des différentes zones de chauffage, qui consiste à ce que l'unité de contrôle alimente consécutivement toutes les zones de chauffage pendant une durée T0, l'étape de scrutation se produisant pendant une durée T1 avant de prendre fin ;
- Une étape où un signal de confirmation SC est continûment ou périodiquement généré si un des articles électroniques de cuisson communicants est positionné sur une des zones de chauffage pendant l'étape de scrutation ;
- Une étape de réception par la table de cuisson du signal de confirmation SC et une étape d'appairage de l'article électronique de cuisson communicant générateur du signal de confirmation SC avec ladite zone de chauffage alimentée ;
- Une étape d'alimentation en continue des bobines primaires de la zone de chauffage appairée suivant une consigne de chauffe provenant de l'article électronique de cuisson communicant ou de la table de cuisson ou encore du signal de commande SCO ;
- Et une étape qui consiste à réitérer au moins les étapes précédentes de scrutation, d'appairage et d'alimentation lorsque la table de cuisson réceptionne un nouveau signal d'activation SA et/ou lorsque la table ne réceptionne plus le signal de confirmation SC d'un article électronique de cuisson communicant déjà appairé.

On comprendra mieux les buts, aspects et avantages de la présente invention d'après la description donnée ci-après d'un mode particulier de réalisation de l'invention présenté à titre d'exemple non limitatif, en se référant aux dessins annexés dans lesquels :
- la figure 1 est une vue en coupe du système selon l'invention ;
- la figure 2 est une vue en perspective du système selon l'invention ;
- la figure 3 est une vue de coté en coupe d'un article électronique de cuisson communicant ;
- la figure 4 est une vue de dessus d'un article électronique de cuisson communicant selon un mode de réalisation ;
- la figure 5 est une vue de dessus d'un article électronique de cuisson communicant selon un autre mode de réalisation ;
- la figure 6 est un schéma du procédé de fonctionnement du système ;
- la figure 7 est un schéma de principe du fonctionnement d'une étape du procédé ;
- la figure 8 est un schéma de fonctionnement du système avec un article électronique de cuisson communicant ;
- la figure 9 est un schéma de principe du fonctionnement d'une étape du procédé ;
- la figure 10 est un schéma de principe du fonctionnement d'une étape du procédé ;
- la figure 11 est un schéma de fonctionnement du système avec trois articles électroniques de cuisson communicants ;
- la figure 12 est une vue en perspective du système dans un autre mode de réalisation ;
- la figure 13 est une vue en perspective d'un dispositif de contrôle d'une table à induction selon un mode de réalisation particulier.

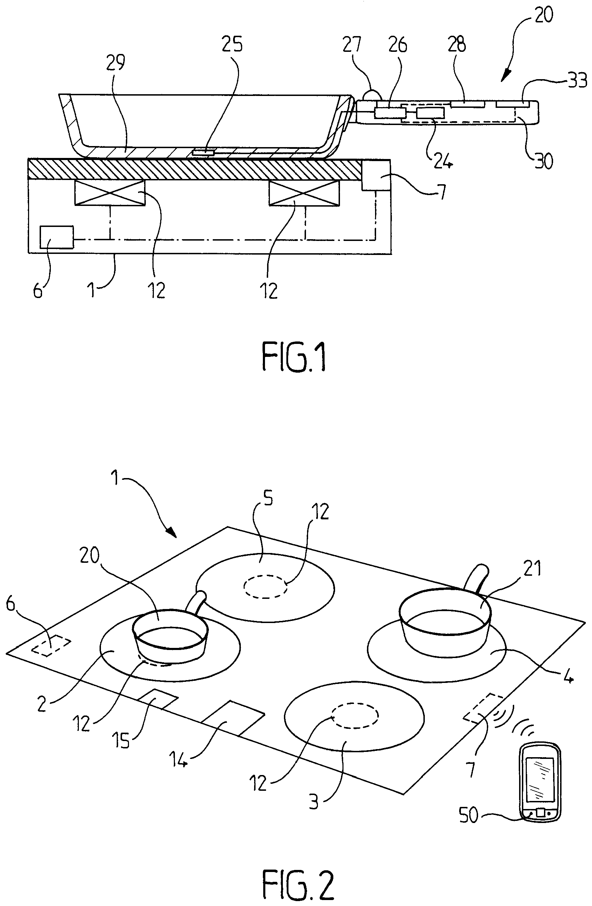

En référence à la figure 1, un article électronique (20, 21, 22, 23) de cuisson communicant comprend une surface de cuisson (29). Cette surface de cuisson (29) est compatible avec la cuisson par induction. On entend par là qu'en présence d'un champ ou d'un flux magnétique la surface de cuisson (29) s'élève thermiquement. Dans le cadre de l'invention, l'article électronique (20, 21, 22, 23) de cuisson communicant comprend une unité (26) de traitement du signal.

On comprendra par unité (26) de traitement du signal une unité électronique capable d'effectuer des opérations logiques primaires sur des signaux en entrée. Cette unité (26) de traitement du signal peut être un circuit logique séquentiel, un microprocesseur ou encore un microcontrôleur.

Plus précisément, le traitement du ou des signaux en entrée peut être fait par des circuits électroniques analogiques. Il peut aussi être réalisé par traitement numérique du signal, à l'aide de microprocesseurs embarqués, de microprocesseurs spécialisés nommés « processeur de signal numérique » ou DSP « Digital Signal Processor », de circuits reconfigurables (FPGA) ou de composants numériques dédiés tel qu'un « circuit intégré développé pour un client ».

L'unité (26) de traitement du signal renvoi en sortie un ou des signaux analogiques ou numériques. Dans le cadre de l'invention, l'unité (26) de traitement du signal est configurée pour générer au moins un signal de confirmation SC d'un flux magnétique et au moins un signal d'activation SA. Ces signaux (SC, SA) peuvent être analogiques ou numériques. Le rôle de ces signaux sera décrit par la suite.

L'article électronique (20, 21, 22, 23) de cuisson communicant comprend également un module (24) de communication qui est relié à l'unité (26) de traitement du signal. Ce module (24) de communication est bidirectionnel et permet de transmettre ou de recevoir des signaux.

Dans le cadre de l'invention ce module (24) de communication permettra de transmettre au moins le signal de confirmation SC et au moins le signal d'activation SA générés par l'unité (26) de traitement du signal.

Ce signal d'activation SA peut également provenir d'un dispositif autre que l'unité (26) de traitement du signal comme cela sera expliqué par la suite.

Dans le cadre de l'invention ce module (24) de communication est un module de communication point à point.

Dans d'autres variantes de réalisation, celui-ci peut être un module infrarouge, un module de communication en champ proche du type NFC (Near Field Communication), ou encore un module Bluetooth®.

Dans une variante de réalisation l'unité (26) de traitement du signal et/ou le module (24) de communication sont amovibles de l'article électronique (20, 21, 22, 23) de cuisson communicant.

L'article électronique (20, 21, 22, 23) de cuisson communicant comprend également un dispositif (25) de mesure d'un champ magnétique relié à cette unité (26) de traitement du signal. La transmission des informations entre ces deux éléments (25, 26) se fait de manière filaire ou sans fil.

Par dispositif (25) de mesure d'un champ magnétique on entend un dispositif qui change d'état physique lorsqu'il est en présence d'un champ magnétique.

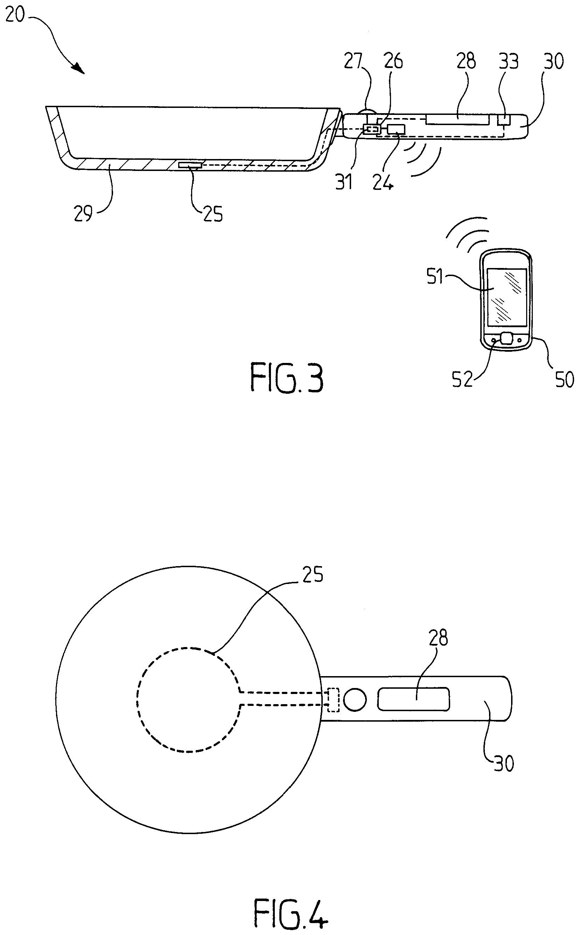

Sans sortir du cadre de l'invention, le dispositif (25) de mesure du champ magnétique est une bobine comprenant une ou plusieurs spires comme illustré sur la figure 4. Ainsi lorsqu'un flux magnétique traverse la bobine, une tension est induite aux bornes de la bobine.

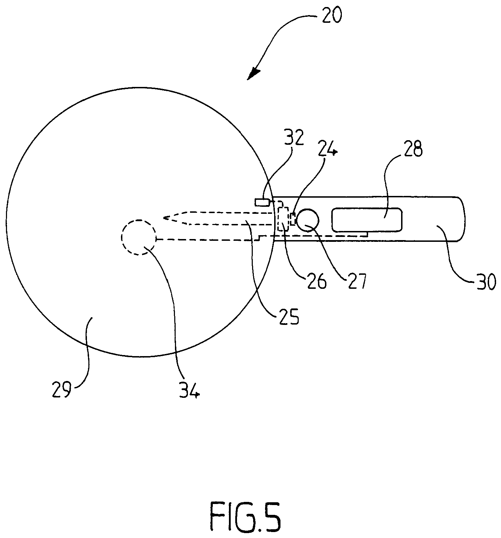

Dans une autre variante illustrée à la figure 5, le dispositif (25) de mesure du champ magnétique est une thermistance à Coefficient de Température Négatif du type thermistance CTN. La thermistance CTN avec ses fils de connexion constitue une boucle de courant. Lorsque qu'un flux magnétique traverse cette boucle, une tension induite image de ce flux magnétique apparaît aux bornes de la thermistance CTN.

Dans une autre variante de réalisation encore, le dispositif (25) de mesure du champ magnétique est un thermocouple (non illustré). Le thermocouple constitue également une boucle de courant et si un flux magnétique traverse cette boucle, une tension induite image de ce flux apparaîtra aux bornes du thermocouple.

Dans une autre variante encore, non illustrée, le dispositif (25) de mesure du champ magnétique est un capteur de champ magnétique. Ce capteur peut être un capteur à effet Hall ou un capteur de type magnétorésistance. Ce capteur permet de mesurer un niveau de champ magnétique et donc de détecter la présence de flux magnétique dans son environnement proche.

Toujours en référence à la figure 1, le dispositif (25) de mesure du champ magnétique est positionné dans la surface de cuisson (29) de l'article électronique (20, 21, 22, 23) de cuisson communicant. Sans toutefois sortir du cadre de l'invention, le dispositif (25) de mesure du champ magnétique peut être positionné dans n'importe quelle partie de l'article électronique (20, 21, 22, 23) de cuisson communicant comme dans une poignée (30) lorsque celui-ci en comprend une.

Cette poignée (30) peut être fixe ou amovible de l'article électronique (20, 21, 22, 23) de cuisson communicant.

Afin d'alimenter en courant électrique les différents composants électroniques compris dans l'article électronique (20, 21, 22, 23) de cuisson communicant, il est prévu une ou plusieurs batteries (non représentées). Les batteries peuvent être positionnées dans la poignée (30).

Comme on peut le voir sur la figure 3 qui est conforme à l'invention, l'article électronique (20, 21, 22, 23) de cuisson communicant comprend un dispositif de mise sous tension (27). Ce dispositif de mise sous tension (27) permet de mettre sous tension l'ensemble des éléments électroniques contenus dans l'article électronique (20, 21, 22, 23) de cuisson communicant comme par exemple l'unité (26) de traitement du signal et/ou le module (24) de communication. Ce dispositif de mise sous tension (27) peut être un bouton mécanique, capacitif ou électromécanique et il est positionné sur la poignée (30) de l'article électronique (20, 21, 22, 23) de cuisson communicant.

Un appui sur ce dispositif de mise sous tension (27) aura pour conséquence d'alimenter en courant électrique l'unité (26) de traitement du signal. Une fois alimentée en courant électrique, l'unité (26) de traitement du signal va générer un signal d'activation SA. Ce signal d'activation SA est généré de manière ponctuelle par l'unité (26) de traitement du signal et sera ensuite envoyé par le module (24) de communication.

Une fois que l'unité (26) de traitement du signal est alimentée de manière continue en courant électrique il est également possible de régénérer un signal d'activation à l'aide du dispositif de mise sous tension (27) en effectuant sur celui-ci un double appui. Enfin un appui long alors que l'unité (26) de traitement du signal est alimentée de manière continue en courant électrique permettra de mettre hors tension l'unité (26) de traitement du signal.

Dans une autre variante de réalisation les différents composants électroniques compris dans l'article électronique (20, 21, 22, 23) de cuisson communicant sont alimentés en continue par les batteries et lorsque les différents composants électroniques ne sont pas utilisés, ils se trouvent dans un mode de veille. Le réveil de ceux-ci se fait par le dispositif de mise sous tension (27), et le signal d'activation SA est généré au réveil des différents composants électroniques. Il est ensuite possible de réémettre ce signal d'activation SA. Cette réémission peut se faire entre autre par un appui sur le dispositif de mise sous tension (27).

L'unité (26) de traitement du signal de l'article électronique (20, 21, 22, 23) de cuisson communicant comprend également une mémoire (31) programmable comme cela est visible sur la figure 3. Cette mémoire (31) programmable permet de stocker différents types d'informations numériques. A titre d'exemples non limitatifs, on pourra stocker le type d'ustensile utilisé, un identifiant de l'article électronique (20, 21, 22, 23) de cuisson communicant, des profils de température de recettes, des temps de cuisson etc.

Les signaux de confirmation SC et les signaux d'activation SA générés par l'unité (26) de traitement du signal pourront donc contenir dans une trame un ensemble d'informations préenregistrées dans la mémoire (31) programmable.

La mémoire (31) de l'unité (26) de traitement du signal peut être programmée à distance. Cette programmation peut se faire par un terminal de communication portable (50).

L'échange de données entre la mémoire (31) programmable de l'unité (26) de traitement du signal et le terminal de communication portable (50) peut se faire dans les deux sens.

Le terminal de communication portable (50) comprend un écran LCD (51) et un clavier (52). Le terminal de communication portable (50) peut être un téléphone portable, un assistant portable électronique et communicant ou tout autre dispositif permettant de communiquer et d'échanger des informations.

L'échange des informations entre le module (24) de communication et le terminal de communication portable (50) peut se faire par infrarouge, par communication en champ proche du type NFC (Near Field Communication), par protocole Bluetooth® ou encore par ondes radiofréquences.

Cependant, d'autres moyens de communication à distance, tels que l'amplitude ou la fréquence de modulation, UHF, etc., peuvent être utilisés.

L'article électronique (20, 21, 22, 23) de cuisson communicant intègre une unité de commande (28) visible sur la figure 1. Cette unité de commande (28) est reliée à l'unité (26) de traitement du signal.

Par unité de commande (28) on entend une unité sur laquelle un utilisateur peut agir directement. Une action sur cette unité de commande (28) permet à l'unité (26) de traitement du signal de générer des signaux de commande SCO. Par le biais de cette unité de commande (28), un utilisateur peut donc générer des signaux de commande SCO qui pourront ensuite être transmis à un dispositif distant comme par exemple une table de cuisson.

L'unité de commande (28) peut être tactile ou être composée de touches capacitives ou encore être composée de boutons mécaniques classiques.

En référence à la figure 5 qui est une variante de réalisation d'un article électronique (20, 21, 22, 23) de cuisson communicant, l'article électronique (20, 21, 22, 23) de cuisson communicant comprend un capteur (32) de température relié à l'unité (26) de traitement du signal. Le capteur (32) de température positionné dans l'article électronique (20, 21, 22, 23) de cuisson communicant peut renvoyer une information locale de la température qui règne à proximité dudit capteur (32) de température. Cette information de température est remontée au niveau de l'unité (26) de traitement du signal. Sans sortir du cadre de l'invention, le capteur (32) de température peut être positionné au niveau de la surface de cuisson (29) de l'article électronique (20, 21, 22, 23) de cuisson communicant ou sur une paroi de l'article électronique (20, 21, 22, 23) de cuisson communicant.

Ce capteur (32) de température peut être amovible ou fixe par rapport à l'article électronique (20, 21, 22, 23) de cuisson communicant.

En référence aux figures 1 et 3, l'article électronique (20, 21, 22, 23) de cuisson communicant comprend également un dispositif (33) d'affichage relié à l'unité (26) de traitement du signal. Ce dispositif (33) d'affichage peut être un écran à cristaux liquides.

Lorsque l'unité (26) de traitement du signal et/ou le module (24) de communication sont alimentés en courant électrique et que le dispositif (25) de mesure du champ magnétique mesure un champ magnétique, alors l'unité (26) de traitement du signal va générer un signal de confirmation SC qui indique qu'un flux magnétique est bien détecté par le dispositif (25) de mesure du champ magnétique. Ce signal de confirmation SC sera ensuite émis par l'intermédiaire du module (24) de communication. Tant que le dispositif (25) de mesure du champ magnétique mesure le champ magnétique, l'unité (26) de traitement du signal génère le signal de confirmation SC et le module (24) de communication l'émet, ce qui fait que le signal de confirmation SC est émis de manière continue. L'unité (26) de traitement du signal peut également générer le signal de confirmation SC de manière périodique.

Si l'utilisateur décide de ne plus alimenter en énergie l'unité (26) de traitement du signal ou le module (24) de communication, alors il lui suffit d'agir sur le dispositif de mise sous tension (27). Une fois que l'unité (26) de traitement du signal ou que le module (24) de communication ne sont plus alimentés en courant électrique, le signal de confirmation SC n'est plus généré et ne sera donc plus émis.

De même que si le dispositif (25) de mesure du champ magnétique ne mesure plus de champ magnétique alors le signal de confirmation SC n'est plus généré par l'unité (26) de traitement du signal.

Dans une variante d'alimentation en courant électrique de ces différents composants électroniques, on utilise un dispositif de récupération (34) d'énergie magnétique illustré à la figure 5. Par exemple ce dispositif de récupération (34) d'énergie magnétique peut être composé d'une ou de plusieurs bobines réceptrices positionnées dans l'article électronique (20, 21, 22, 23) de cuisson communicant. Les une ou plusieurs bobines réceptrices peuvent être positionnées dans la surface de cuisson (29) de l'article électronique (20, 21, 22, 23) de cuisson communicant, dans la paroi ou encore dans la poignée (30) de celui-ci. Les une ou plusieurs bobines réceptrices transmettent ainsi le courant récupéré aux différents composants électroniques comme par exemple l'unité (26) de traitement du signal et le module (24) de communication en vue de les alimenter. Il est bien entendu que les différents composants électroniques seront effectivement alimentés en courant électrique sous réserve que le dispositif de mise sous tension (27) ait été au préalable activé.

Dans le cas où l'article électronique (20, 21, 22, 23) de cuisson communicant ne comporte pas de batteries mais un dispositif de récupération (34) d'énergie magnétique, un appui sur le dispositif de mise sous tension (27) ne produira le signal d'activation SA que si le dispositif de récupération (34) d'énergie magnétique alimente effectivement en courant électrique les composants électroniques et notamment l'unité (26) de traitement du signal. Si cela n'est pas le cas alors un simple appui ne produira aucun effet.

Une table (1) de cuisson visible aux figures 1 et 2 comprend au moins deux zones (2, 3, 4, 5) de chauffage pour supporter un ou plusieurs articles électroniques (20, 21, 22, 23) de cuisson communicants.

Dans le cadre de l'invention ces zones (2, 3, 4, 5) de chauffage sont des zones de chauffage par induction.

Classiquement, dans les cas les plus rencontrés, la table (1) de cuisson comprend quatre zones (2, 3, 4, 5) de chauffage comme cela est visible à la figure 2.

Cependant l'invention n'est pas restreinte à un nombre limité de zone (2, 3, 4, 5) de chauffage et peut comprendre un nombre pair comme un nombre impair et cela sans limitation du nombre de zone (2, 3, 4, 5) de chauffage.

La table (1) de cuisson comprend une unité (6) de contrôle. Cette unité (6) de contrôle est reliée à chaque zone (2, 3, 4, 5) de chauffage. Cette unité (6) de contrôle peut être positionnée à l'intérieur de la table de cuisson ou à l'extérieure. La table de cuisson comprend un dispositif (7) de communication. Ce dispositif (7) de communication est sans fil. Ce dispositif (7) de communication permet de recevoir des signaux d'un dispositif extérieur.

Le dispositif extérieur mentionné ci-dessus peut être un article électronique (20, 21, 22, 23) de cuisson communicant ou encore un terminal de communication portable (50).

Ainsi dans le cadre de l'invention le dispositif (7) de communication de la table (1) de cuisson peut recevoir des signaux d'activation SA, des signaux de commande SCO ou des signaux de confirmation SC. Ces signaux seront ensuite transmis à l'unité (6) de contrôle de la table (1) de cuisson.

Le dispositif (7) de communication peut également transmettre des informations à l'article électronique (20, 21, 22, 23) de cuisson communicant ou encore au terminal de communication portable (50). Ce module de communication est un module de communication point à point et l'échange des informations entre le dispositif (7) de communication et le terminal de communication portable (50) et/ou l'article électronique (20, 21, 22, 23) de cuisson communicant peut se faire par infrarouge, par communication en champ proche du type NFC (Near Field Communication), par protocole Bluetooth® ou encore par ondes radiofréquences.

Les zones (2, 3, 4, 5) de chauffage, comprennent des bobines (12) primaires. Ces bobines (12) primaires sont positionnées classiquement comme dans tous les systèmes de chauffage par induction sous chaque zone (2, 3, 4, 5) de chauffage et sont dimensionnées pour pouvoir fournir suffisamment de puissance et/ou d'énergie pour chauffer par induction les articles électroniques (20, 21, 22, 23) de cuisson communicants.

Dans le cadre de l'invention, à chaque zone (2, 3, 4, 5) de chauffage est associée une bobine (12) primaire.

Dans une variante de réalisation de l'invention visible à la figure (12), des bobines (13) secondaires sont également intégrées au niveau des zones (2, 3, 4, 5) de chauffage. Ces bobines (13) secondaires sont positionnées sous les zones (2, 3, 4, 5) de chauffage et délivrent une puissance plus faible que les bobines (12) primaires. Nous verrons par la suite quelle est leur utilité.

Que ce soit les bobines (12) primaires ou les bobines (13) secondaires, elles sont reliées distinctement à l'unité (6) de contrôle de la table (1) de cuisson. Ainsi chaque bobine (12) primaire et/ou secondaire (13) est identifiée de manière unique par l'unité (6) de contrôle. Ainsi lorsque la table (1) de cuisson comprend quatre zones (2, 3, 4, 5) de chauffage avec quatre bobines (12) primaires distinctes, l'unité (6) de contrôle comprendra au moins quatre ports d'entrée/sortie de manière à pouvoir identifier chaque bobine (12) primaire de manière unique. De la même manière, lorsque la table (1) de cuisson comprendra en plus des quatre bobines (12) primaires, quatre bobines (13) secondaires l'unité (6) de contrôle comprendra au moins huit ports distincts d'entrée/sortie afin d'identifier les quatre bobines (12) primaires et les quatre bobines (13) secondaires de manière distincte. Grâce à un tel dispositif, la table (1) de cuisson pourra commander distinctement et de manière indépendante l'une ou l'autre des bobines (12, 13).

Dans le cas de table de cuisson de grande dimension, on utilisera un ou plusieurs multiplexeurs (60, 61) entre les différentes bobines (12, 13) et l'unité (6) de contrôle. Cela ne change en rien la commande distincte des bobines (12, 13) par l'unité (6) de contrôle et cela permet de diminuer la quantité de câble nécessaire. Dans ce cas de figure, c'est le multiplexeur qui aura le nombre de ports d'entrée/sortie correspondant au nombre de bobines et un seul câble reliera le multiplexeur à l'unité (6) de contrôle de la table (1) de cuisson.

L'unité (6) de contrôle sera choisie de manière à pouvoir alimenter et/ou commander les bobines (12) primaires et/ou les bobines (13) secondaires des zones (2, 3, 4, 5) de chauffage pendant une durée très courte qui peut être de quelques fractions de secondes.

L'unité (6) de contrôle peut être programmable à distance. Cette programmation peut se faire par le terminal de communication portable (50). L'échange de données entre l'unité (6) de contrôle et le terminal de communication portable (50) peut se faire dans les deux sens. Un utilisateur peut donc à distance programmer la table (1) de cuisson.

Dans une variante de réalisation également visible à la figure (12), chaque zone (2, 3, 4, 5) de chauffage de la table (1) de cuisson comprend un ou plusieurs capteurs (8, 9, 10, 11) de présence d'un article électronique (20, 21, 22, 23) de cuisson communicant. De la même façon que pour les bobines (12) primaires ou (13) secondaires, ces capteurs (8, 9, 10, 11) de présence sont reliés à l'unité (6) de contrôle. Ils sont identifiés de manière unique par cette même unité (6) de contrôle.

Ces capteurs (8, 9, 10, 11) de présence sont capables de détecter la présence d'un article électronique (20, 21, 22, 23) de cuisson communicant positionné à proximité immédiate d'une des zones (2, 3, 4, 5) de chauffage et d'en informer l'unité (6) de contrôle.

Dans le cas où un multiplexeur est utilisé, les capteurs (8, 9, 10, 11) de présence pourront fonctionner avec une telle architecture toujours dans une optique de gain de place et de réduction de cout et cela sans modifier le fonctionnement du système.

On pourra utiliser indifféremment l'ensemble des capteurs connus à ce jour et capables d'assurer une détection à proximité comme des détecteurs infrarouges, des capteurs à effet Hall, des détecteurs capacitifs ou encore dans d'autres variantes des détecteurs électro-optique, des jauges de contrainte, de sondes mécaniques etc.

Ainsi lorsqu'un article électronique (20, 21, 22, 23) de cuisson communicant est placé sur l'une des zones (2, 3, 4, 5) de chauffage, la table (1) de cuisson et plus spécifiquement l'unité (6) de contrôle sera immédiatement en mesure de déterminer, par le capteur (8, 9, 10, 11) de présence associé si un ou plusieurs articles électroniques (20, 21, 22, 23) de cuisson communicants sont positionnés sur une des zones (2, 3, 4, 5) de chauffage en particulier. Comme chaque capteur (8, 9, 10, 11) de présence est identifié de manière unique par rapport à une zone (2, 3, 4, 5) de chauffage associée, l'unité (6) de contrôle pourra déterminer quelles sont les zones (2, 3, 4, 5) de chauffage qui sont occupées ou non par un article électronique (20, 21, 22, 23) de cuisson communicant.

La table (1) de cuisson comprend un afficheur (14) qui permet d'afficher un certain nombre d'informations liées à la table (1) de cuisson comme la puissance générée sur chaque zone (2, 3, 4, 5) de chauffage, le nombre de zones (2, 3, 4, 5) de chauffage en cours d'alimentation, appairées etc.

La table de cuisson comprend également un dispositif (15) de contrôle qui permet de piloter la puissance de chauffe de chaque zone (2, 3, 4, 5) de chauffage.

Ce dispositif (15) de contrôle est placé sur la table (1) de cuisson et il peut également générer un signal d'activation SA par un appui sur celui-ci. Ce signal d'activation peut être reçu par l'unité (6) de contrôle ou bien par le dispositif (7) de communication de la table (1) de cuisson.

La structure de la surface des zones (2, 3, 4, 5) de chauffage est constituée d'un matériau vitrocéramique tel que le lithium, alumino-silicate qui est formé et traité thermiquement.

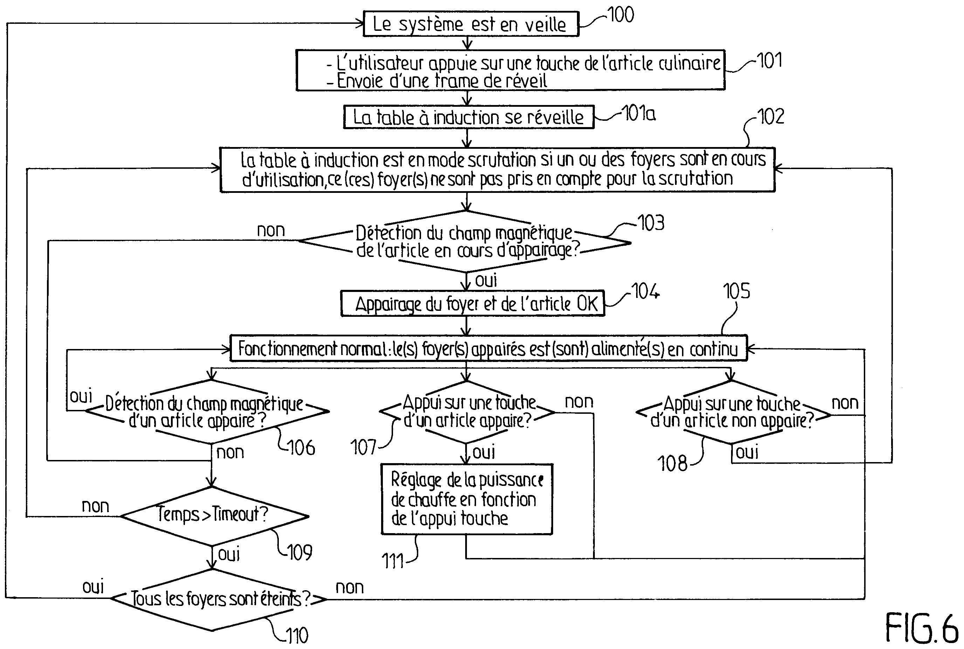

Nous allons maintenant expliquer le fonctionnement du système en nous référant aux figures 6 à 11 qui sont représentatives de l'utilisation d'un tel système et dans lesquelles interviennent une étape de scrutation (102) et une étape d'appairage (104).

En référence à la figure 6, dans un premier temps la table (1) de cuisson se trouve tout d'abord éteinte.

Dans une première étape d'allumage (100), la table (1) de cuisson est mise sous tension par un utilisateur. Suite à cette mise sous tension, la table (1) de cuisson est en veille. La table de cuisson est alors en attente d'un message de réveil. D'après l'invention ce message de réveil doit provenir d'un article électronique (20, 21, 22, 23) de cuisson communicant.

L'étape suivante est une étape de démarrage (101) de la table de cuisson. Le démarrage de la table de cuisson s'effectue par un utilisateur et par l'intermédiaire d'un article électronique (20, 21, 22, 23) de cuisson communicant. Dans cette étape de démarrage l'utilisateur actionne le dispositif de mise sous tension (27) de l'unité (26) de traitement du signal de l'article électronique (20, 21, 22, 23) de cuisson communicant. Comme cela a été énoncé plus haut, lors de cette étape le dispositif de mise sous tension (27) et plus particulièrement l'unité (26) de traitement du signal va générer un signal d'activation SA. Ce signal d'activation SA est par la suite transmis à la table de cuisson par le module (24) de communication de l'article électronique (20, 21, 22, 23) de cuisson communicant.

Le signal d'activation SA peut également être émis par le dispositif (15) de contrôle placé sur la table (1) de cuisson.

Le dispositif (7) de communication de la table (1) de cuisson reçoit ce signal d'activation SA qui est par la suite transmis à l'unité (6) de contrôle de la table (1) de cuisson.

Dans le cas où c'est le dispositif (15) de contrôle placé sur la table (1) de cuisson qui génère un signal d'activation SA, celui-ci est de préférence transmis à l'unité (6) de contrôle de la table (1) de cuisson sans passer par le dispositif (7) de communication de la table (1) de cuisson.

Dans cette étape, l'article électronique (20, 21, 22, 23) de cuisson communicant peut être positionné sur la table (1) de cuisson ou à distance de celle-ci.

S'ensuit une étape où la table (1) de cuisson est maintenant active (101a) et qui permet de lancer automatiquement l'étape suivante.

Dans l'étape suivante qui est une étape de scrutation (102), la table (1) de cuisson se met dans un mode de scrutation.

Dans cette étape de scrutation (102), l'unité (6) de contrôle est activée de manière à alimenter consécutivement ; toutes les zones (2, 3, 4, 5) de chauffage.

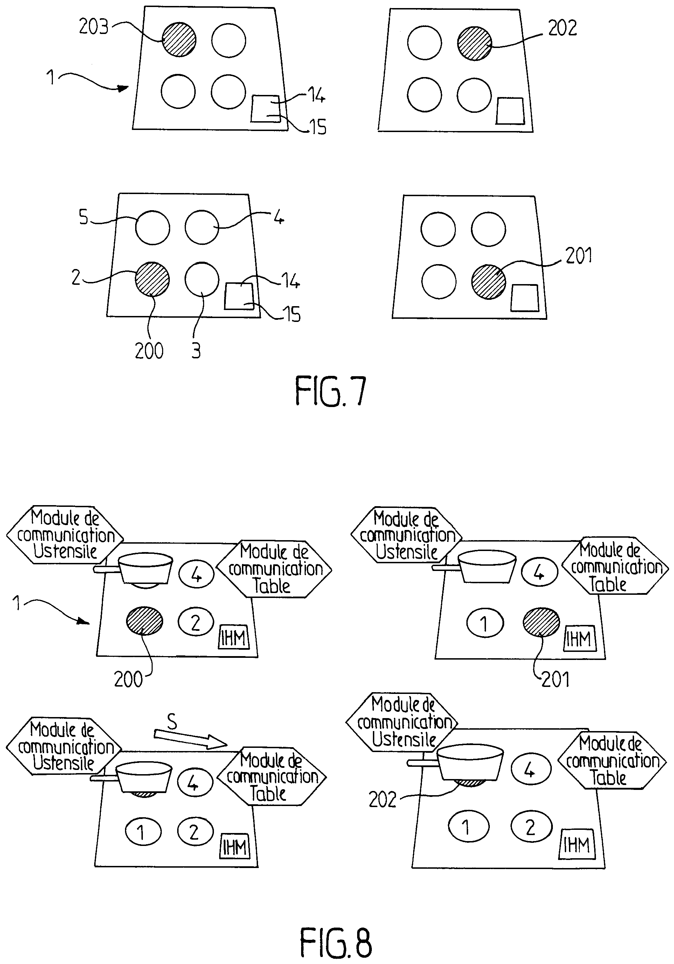

Cette étape de scrutation (102), visible sur la figure 7 consiste précisément à alimenter pendant un certain temps les zones (2, 3, 4, 5) de chauffage les unes après les autres. Dans le cas où la table (1) de cuisson comporte quatre zones (2, 3, 4, 5) de chauffage, la table (1) de cuisson alimentera la première (200) des zones (2) de chauffage pendant un temps déterminé T0, puis la seconde (201) des zones (3) de chauffage pendant le temps T0, ensuite la troisième (202) des zones (4) de chauffage pendant le même temps T0 et enfin la quatrième (203) des zones (5) de chauffage pendant le temps T0. Dans cette étape de scrutation (102), aucune des zones (2, 3, 4, 5) de chauffage n'est alimentée en même temps.

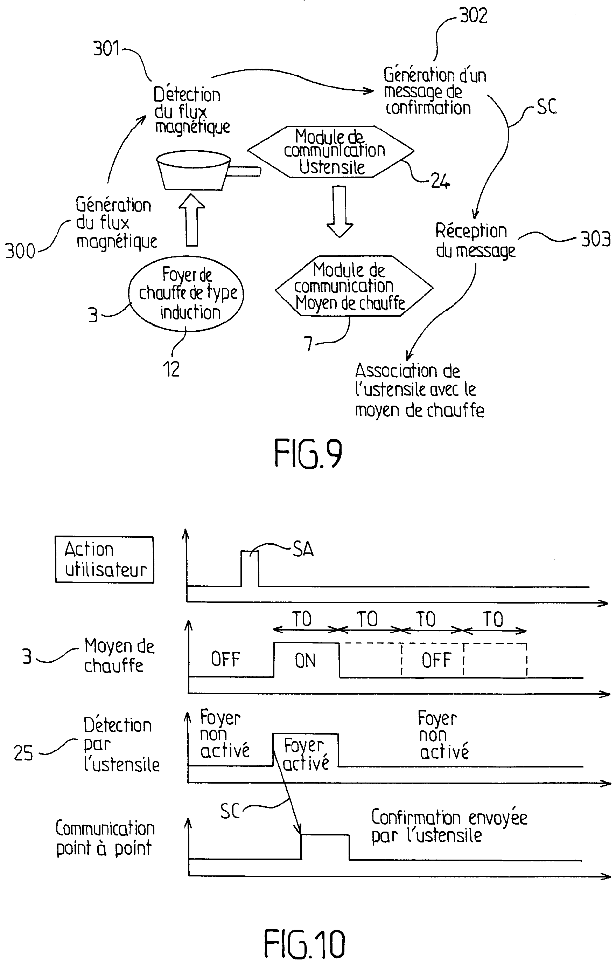

Le temps T0, pendant lequel est alimentée une zone (2, 3, 4, 5) de chauffage, comme visible à la figure 10, peut être d'une fraction de seconde, de quelques millisecondes ou encore de quelques secondes. En général ce temps T0 est très court afin que cette étape de scrutation (102) soit la plus rapide possible. Lors de cette étape de scrutation (102), la table (1) de cuisson vérifie ensuite si un article électronique (20, 21, 22, 23) de cuisson communicant a été positionné sur une des zones (2, 3, 4, 5) de chauffage de la table (1) de cuisson, comme c'est le cas sur la figure 8. Dans ce cas de figure l'étape de scrutation (102) s'arrête à la troisième (202) des zones (4) de chauffage car la table (1) de cuisson détecte la présence d'un article électronique (20, 21, 22, 23) de cuisson.

Pour détecter la présence d'un article électronique (20, 21, 22, 23) de cuisson communicant, la table (1) de cuisson procède à une étape de détection (103) d'un signal de confirmation SC émis par l'article électronique (20, 21, 22, 23) de cuisson communicant.

Si pendant l'étape de détection (103) d'un signal de confirmation SC la table (1) de cuisson reçoit un signal de confirmation SC émis par l'article électronique (20, 21, 22, 23) de cuisson communicant alors la table (1) de cuisson procède à une étape d'appairage (104) de l'article électronique (20, 21, 22, 23) de cuisson communicant.

Nous allons voir précisément en lien avec la figure 9 comment s'opèrent les étapes de détection (103) et d'appairage (104) de l'article électronique (20, 21, 22, 23) de cuisson communicant par et avec la table (1) de cuisson.

Lorsque l'étape (102) de scrutation est en cours, l'utilisateur peut positionner l'article électronique (20, 21, 22, 23) de cuisson communicant sur une quelconque des zones (2, 3, 4, 5) de chauffage de la table (1) de cuisson comme cela a été décrit à la figure 8. Au moment où la table (1) de cuisson alimente pendant un temps T0 la zone (2, 3, 4, 5) de chauffage sur laquelle se trouve l'article électronique (20, 21, 22, 23) de cuisson communicant, une étape d'émission d'un champ magnétique (300) est produit au niveau de cette zone (2, 3, 4, 5) de chauffage. Dans ce cas de figure, le dispositif (25) de mesure du champ magnétique de l'article électronique (20, 21, 22, 23) de cuisson communicant détecte la présence du flux magnétique généré par la zone (2, 3, 4, 5) de chauffage alimentée. C'est l'étape de détection du flux magnétique (301) par l'article électronique (20, 21, 22, 23) de cuisson communicant. Cette information est récupérée par l'unité (26) de traitement du signal de l'article électronique (20, 21, 22, 23) de cuisson communicant qui génère alors (302) un signal de confirmation SC transmis par le module (24) de communication de l'article électronique (20, 21, 22, 23) de cuisson communicant.

Le signal de confirmation SC émis lors d'une étape d'émission du signal comprend dans sa trame différentes informations et au moins une information de confirmation de la présence d'un champ magnétique et une information d'identification de l'article électronique (20, 21, 22, 23) de cuisson communicant.

Ce signal de confirmation SC est ensuite reçu par le dispositif (7) de communication de la table (1) de cuisson lors d'une étape de réception (303). L'unité (6) de contrôle de la table (1) de cuisson récupère et traite cette information de confirmation.

Comme cela a été décrit précédemment, le signal de confirmation SC comprend dans sa trame au moins l'identifiant de l'article électronique (20, 21, 22, 23) de cuisson communicant. De plus l'unité (6) de contrôle de la table (1) de cuisson permet de commander distinctement et de manière indépendante l'une ou l'autre des zones (2, 3, 4, 5) de chauffage. Ce qui signifie que à chaque zone (2, 3, 4, 5) de chauffage est associé un identifiant unique qui sera associé à l'identifiant de l'article électronique (20, 21, 22, 23) de cuisson communicant.

Dans cette mesure, la table (1) de cuisson peut associer les différentes informations véhiculées par le signal de confirmation SC du flux magnétique avec la zone (2, 3, 4, 5) de chauffage appairée.

On comprend bien que les délais de transmission de ces signaux sont les délais que l'on trouve classiquement dans les télécommunications afin qu'il y ait le moins d'interférences possibles.

Ainsi l'étape d'appairage (104) est pratiquement immédiate entre l'article électronique (20, 21, 22, 23) de cuisson communicant sous tension et la zone (2, 3, 4, 5) de chauffage alimentée par la table (1) de cuisson.

Comme cela a été énoncé plus haut ce sont plus particulièrement les bobines (12) primaires qui sont identifiées de manière unique par l'unité (6) de contrôle et ce sont elles qui sont alimentées lors de l'étape de scrutation (102) pendant un temps T0.

Si après avoir alimenté l'ensemble des zones (2, 3, 4, 5) de chauffage, la table (1) de cuisson ne détecte pas de signal de confirmation SC, alors la table (1) de cuisson s'interroge sur l'action à mener (106) et dans le premier cas de figure, elle réitère l'étape (102) de scrutation décrite à la figure 7. Si au bout d'un temps T1 (109) la table (1) de cuisson n'a toujours pas détecté de signal de confirmation SC, alors se produit le second cas de figure où la table (1) de cuisson procède à une étape (110) de vérification de l'état d'activation des zones (2, 3, 4, 5) de chauffage. En effet la table (1) de cuisson rebasculera en mode veille c'est-à-dire au niveau de l'étape (100) seulement si toutes les zones (2, 3, 4, 5) de chauffage son éteintes. Dans le cas contraire elle restera allumée dans un fonctionnement normal.

Une fois un article électronique (20, 21, 22, 23) de cuisson communicant détecté et appairé par la table (1) de cuisson, la zone (2, 3, 4, 5) de chauffage concernée rentre dans une étape de fonctionnement normal (105). Dans cette étape de fonctionnement normal, la bobine (12) primaire de la zones (2, 3, 4, 5) de chauffage est alors alimentée de manière continue afin de chauffer l'article électronique (20, 21, 22, 23) de cuisson communicant qui vient d'être appairé.

La consigne de chauffage peut être définie grâce aux informations contenues dans la trame du signal de confirmation SC reçu ou alors par une consigne de chauffage entrée directement par l'utilisateur sur la table (1) de cuisson ou encore par une consigne de chauffage par défaut associée à la zones (2, 3, 4, 5) de chauffage. Cette consigne de chauffage par défaut peut être une puissance de chauffage minimale de la zone (2, 3, 4, 5) de chauffage concernée et préenregistrée dans l'unité (6) de contrôle.

Nous allons maintenant voir le cas où l'utilisateur souhaite positionner plusieurs articles électroniques (20, 21, 22, 23) de cuisson communicants et décrire le fonctionnement du système qui est également bien adapté à cette situation.

Si un ou plusieurs articles électroniques (20, 21, 22, 23) de cuisson communicants sont déjà positionnés et appairés avec une ou plusieurs des zones (2, 3, 4, 5) de chauffage de la table (1) de cuisson, celle-ci est alors dans son état de fonctionnement normal (105) pour ces une ou plusieurs zones (2, 3, 4, 5) de chauffage. C'est-à-dire que les bobines (12) primaires sont alimentées en continu suivant une consigne de chauffe particulière. Si l'utilisateur souhaite alors positionner un article électronique (20, 21, 22, 23) de cuisson communicant supplémentaire sur la table (1) de cuisson alors la table (1) de cuisson se trouve au niveau d'une étape d'interrogation (108) et l'ensemble des étapes d'activation de scrutation et d'appairage décrites ci-dessus seront réitérées à la seule différence que la table (1) de cuisson ne prendra pas en compte les zones (2, 3, 4, 5) de chauffage déjà appairées lors de l'étape de scrutation (102) décrite précédemment.

Toujours dans le cadre de l'étape d'interrogation (108), si la table (1) de cuisson reçoit un signal d'activation SA d'un article électronique (20, 21, 22, 23) de cuisson communicant déjà appairé, la table (1) de cuisson ne réagit pas et reste dans le fonctionnement normal de l'étape (105).

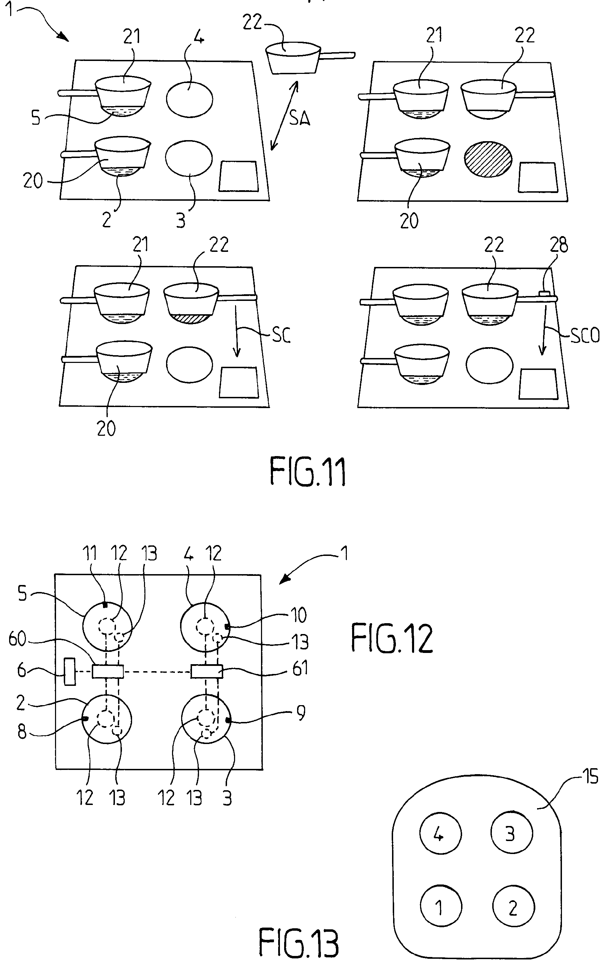

Pour illustrer cela en lien avec la figure 11, l'exemple suivant s'intéresse à une table (1) de cuisson avec quatre zones (2, 3, 4, 5) de chauffage ayant déjà deux zones (2, 5) de chauffage appairées avec deux articles électroniques (20, 21, 22, 23) de cuisson communicants. Si un utilisateur souhaite en positionner un troisième, l'étape de démarrage (101) s'opère et durant l'étape de scrutation (102) qui suit, seules les zones (3, 4) de chauffage non appairées seront interrogées comme cela est représenté à la figure 11.

Comme cela a été décrit ci-dessus, le signal d'activation SA est émis de manière ponctuelle et unique par l'appui sur le dispositif de mise sous tension (27) de l'article électronique (20, 21, 22, 23) de cuisson communicant.

Dans ce cas de figure si au bout d'un temps T1 (109) et après avoir réitéré l'étape de scrutation (102) comme énoncé ci-dessus, la table (1) de cuisson n'a toujours pas détecté de signal de confirmation SC du nouvel article électronique (20, 21, 22, 23) de cuisson communicant, alors la table (1) de cuisson procède toujours à l'étape de vérification (110) où elle vérifie l'état d'activation des zones (2, 3, 4, 5) de chauffage. Dans le cas présent, la table (1) de cuisson ne rebasculera pas en mode veille car toutes les zones (2, 3, 4, 5) de chauffage ne sont pas éteintes et la table (1) de cuisson restera dans le mode de fonctionnement normal de l'étape (105).

Dans le cas où un article électronique (20, 21, 22, 23) de cuisson communicant ou plusieurs articles électroniques (20, 21, 22, 23) de cuisson communicants sont positionnés sur la table (1) de cuisson, on peut être amené à perdre le signal de commande SC d'un des articles électroniques (20, 21, 22, 23) de cuisson communicants. Ce cas de figure correspond au cas où un des articles électroniques (20, 21, 22, 23) de cuisson communicants a été enlevé d'une des zones (2, 3, 4, 5) de chauffage. Dans ce cas de figure le dispositif (25) de mesure du champ magnétique positionné dans l'article électronique (20, 21, 22, 23) de cuisson communicant ne voit plus de flux magnétique, l'unité (26) de traitement du signal ne génère plus de signal de confirmation SC et la table (1) de cuisson perd alors le signal associé à cet article électronique (20, 21, 22, 23) de cuisson communicant. La table (1) de cuisson, après avoir réitéré l'étape (106) qui consiste à vérifier qu'elle détecte bien le signal de confirmation SC, basculera dans l'étape de scrutation 102 en incluant également la zone (2, 3, 4, 5) de chauffage qui a perdu le signal de confirmation SC. Ceci se fait afin de vérifier si l'article électronique (20, 21, 22, 23) de cuisson communicant n'a pas été repositionné sur une autre zone (2, 3, 4, 5) de chauffage ou sur cette même zone (2, 3, 4, 5) de chauffage.

Lorsque le signal de confirmation SC sera de nouveau détecté, la nouvelle zone (2, 3, 4, 5) de chauffage sur laquelle se trouve l'article électronique (20, 21, 22, 23) de cuisson communicant sera alimentée en continu en lui conférant la puissance de chauffe précédemment configurée avant la perte du signal de confirmation. Dans ce cas l'étape d'appairage (104) sera effectuée afin d'associer la nouvelle zone (2, 3, 4, 5) de chauffage avec l'article électronique (20, 21, 22, 23) de cuisson communicant replacé sur cette nouvelle zone (2, 3, 4, 5) de chauffage.

Si aucune détection du signal de confirmation SC perdu n'intervient durant le temps T1, et toujours en lien avec l'étape (109), la table (1) de cuisson cesse l'étape de scrutation (102) et l'appairage de cet article électronique (20, 21, 22, 23) de cuisson communicant sera annulé. Dans le cas où aucun autre article électronique (20, 21, 22, 23) de cuisson communicant n'est appairé avec la table (1) de cuisson, celle-ci bascule dans son mode veille.

De cette manière si un article électronique (20, 21, 22, 23) de cuisson communicant a été déplacé, la table (1) de cuisson sera en mesure de retrouver la nouvelle zone (2, 3, 4, 5) de chauffage de l'article électronique (20, 21, 22, 23) de cuisson communicant.

Une fois un article électronique (20, 21, 22, 23) de cuisson communicant appairé avec une des zones (2, 3, 4, 5) de chauffage il est possible de régler la puissance de chauffage de la zone (2, 3, 4, 5) de chauffage directement grâce à l'article électronique (20, 21, 22, 23) de cuisson communicant comme indiqué à la figure 11.

Ce réglage se fait à travers les signaux de commandes SCO générés par l'unité (26) de traitement du signal et par l'unité de commande (28).

Dans le cas où cette unité de commande (28) est composée de boutons, on peut avoir deux boutons de commande, + et -, qui permettront de piloter la consigne de chauffe de la zone (2, 3, 4, 5) de chauffage en cours d'utilisation.

Ainsi un appui sur le bouton + permettra d'envoyer un signal de commande SCO à la table (1) de cuisson ce qui aura pour effet d'augmenter la puissance de chauffage de la zone (2, 3, 4, 5) de chauffage concernée.

Un appui sur le bouton - permettra d'envoyer un signal de commande SCO à la table (1) de cuisson ce qui aura pour effet de diminuer la puissance de chauffage de la zones (2, 3, 4, 5) de chauffage concernée.

Cette unité de commande (28) peut aussi être composée d'un bouton rotatif.

Cette unité de commande (28) peut également être tactile.

Dans tous ces cas de figure, à chaque appui sur l'unité de commande (28), l'article électronique (20, 21, 22, 23) de cuisson communicant enverra un signal de commande SCO à la table (1) de cuisson pour configurer la consigne souhaitée.

Dans une variante de réalisation de l'invention l'étape de scrutation (102) est effectuée par les bobines (13) secondaires associées aux zones (2, 3, 4, 5) de chauffage ce qui permet de laisser libre les bobines (12) primaires et d'utiliser moins d'énergie pour effectuer l'étape de scrutation (102). De la même façon que précédemment, une fois que le dispositif (25) de mesure du champ magnétique voit un flux magnétique émis par une des bobines (13) secondaires, un signal de confirmation SC est généré et envoyé et les bobines (12) primaires de la table (1) de cuisson prennent immédiatement le relais sur les bobines (13) secondaires afin d'alimenter en énergie la zone (2, 3, 4, 5) de chauffage sur laquelle l'article électronique (20, 21, 22, 23) de cuisson communicant a été détecté. L'ensemble des autres étapes décrites à la figure (6) sont réalisées de la même manière que précédemment pour les bobines (13) secondaires.

Dans une autre variante encore de réalisation, le système est identique au système précédemment décrit et chaque zone (2, 3, 4, 5) de chauffage comprend en plus un ou plusieurs capteurs (8, 9, 10, 11) de présence d'un article électronique (20, 21, 22, 23) de cuisson communicant. Dans une première configuration, le système comprend des bobines (12) primaires et un ou plusieurs capteurs (8, 9, 10, 11) de présence et dans une seconde configuration le système comprend des bobines (12) primaires, des bobines (13) secondaires et un ou plusieurs capteurs (8, 9, 10, 11) de présence visible à la figure 12. Dans ces deux cas de figure, l'étape d'appairage (104) d'un article électronique (20, 21, 22, 23) de cuisson communicant se fera seulement si la table (1) de cuisson reçoit d'une part un signal de confirmation SC et d'autre part si le capteur (8, 9, 10, 11) de présence associé à la zone (2, 3, 4, 5) de chauffage détecte également la présence d'un article électronique (20, 21, 22, 23) de cuisson communicant.

Cette double vérification permet de ne pas alimenter les bobines (12) primaires d'une zone (2, 3, 4, 5) de chauffage si l'article électronique (20, 21, 22, 23) de cuisson communicant n'est pas présent sur celle-ci.

En effet comme chaque capteur (8, 9, 10, 11) de présence est déterminé de manière unique par rapport à une zone (2, 3, 4, 5) de chauffage associée, l'unité (6) de contrôle pourra déterminer quelles sont les zones (2, 3, 4, 5) de chauffage qui sont occupées ou non.

L'utilité de ces capteurs (8, 9, 10, 11) de présence tient aussi dans le fait que la table (1) de cuisson ne relancera pas nécessairement l'étape de scrutation (102) du simple fait que le signal de confirmation SC a été perdu par la table (1) de cuisson, ce qui peut arriver dans le cas où l'article électronique (20, 21, 22, 23) de cuisson communicant n'est plus alimenté en énergie et donc ne peut plus transmettre de signal de confirmation SC à la table (1) de cuisson. Dans ce cas de figure, la table (1) de cuisson est configurée pour que le processus de scrutation (102) se mette en fonctionnement seulement si le signal de confirmation SC est perdu et que un des capteurs (8, 9, 10, 11) de présence détecte en parallèle que l'article électronique (20, 21, 22, 23) de cuisson communicant a été retiré de la zone (2, 3, 4, 5) de chauffage.

Enfin dans cette variante, le simple fait que un ou plusieurs capteurs (8, 9, 10, 11) de présence d'un article électronique (20, 21, 22, 23) de cuisson communicant détecte que un article électronique (20, 21, 22, 23) de cuisson communicant a été déplacé envoie à la table (1) de cuisson un signal d'activation SA pour relancer le processus de scrutation (102).

Dans une autre réalisation encore, cette double vérification peut être réalisée en surveillant la charge des bobines (12) primaires. Dans ce cas de figure les un ou plusieurs capteurs (8, 9, 10, 11) de présence ne sont pas nécessaires et une variation de charge d'une zone (2, 3, 4, 5) de chauffage permettra de générer un signal d'activation SA.

Dans une variante de réalisation le dispositif (6) de contrôle qui permet de piloter la puissance de chauffe de chaque zone (2, 3, 4, 5) de chauffage de la table (1) de cuisson est constitué de touches représentant le nombre d'articles électroniques (20, 21, 22, 23) de cuisson communicants pouvant être déposés en simultané. Ce nombre représente le nombre total de foyers à appairer.

Ainsi et comme cela est visible sur la figure 13, pour une table (1) de cuisson comprenant quatre zones (2, 3, 4, 5) de chauffage, le nombre de touches sera égal à quatre. Dans ce cas de figure l'appui sur la touche «1» signifie que l'utilisateur souhaite déposer un article électronique (20, 21, 22, 23) de cuisson communicant sur la table (1) de cuisson. Cette touche ne cible pas une zone (2, 3, 4, 5) de chauffage en particulier. Après avoir appuyé sur cette touche, l'utilisateur peut déposer l'article électronique (20, 21, 22, 23) de cuisson communicant où bon lui semble sur une des zones (2, 3, 4, 5) de chauffage de la table (1) de cuisson.

Le système de détection présenté dans ce document permettra à la table (1) de cuisson d'identifier le zones (2, 3, 4, 5) de chauffage sur lesquelles a été déposé l'article électronique (20, 21, 22, 23) de cuisson communicant.

Si l'utilisateur souhaite configurer sa table (1) de cuisson pour y déposer deux articles électroniques (20, 21, 22, 23) de cuisson communicant par exemple, il doit appuyer sur la touche «2». Ainsi, la table (1) de cuisson saura qu'elle doit recevoir deux messages de confirmation SC de deux articles électroniques (20, 21, 22, 23) de cuisson communicant distincts.

Ce système supplémentaire sur le dispositif (15) de contrôle de la table (1) de cuisson permet d'apporter une sécurité et une optimisation supplémentaire afin que la table (1) de cuisson ne scrute pas inutilement lorsque le nombre d'articles électroniques (20, 21, 22, 23) de cuisson communicant appairés est égal au nombre d'articles électroniques (20, 21, 22, 23) de cuisson communicants sélectionnés par l'utilisateur sur le dispositif (15) de contrôle. Ceci permet d'éviter en outre toutes les interférences avec des systèmes connexes qui pourraient brouiller les signaux de confirmation SC.

## Revendications

1. Système de chauffage par induction comprenant une table de cuisson (1) et un ou plusieurs articles électroniques (20, 21, 22, 23) de cuisson communicant apte à communiquer avec la table (1) de cuisson,
la table (1) de cuisson comprenant :
- au moins deux zones (2, 3, 4, 5) de chauffage par induction aptes à supporter un ou plusieurs articles électroniques (20, 21, 22, 23) communicants avec la table de cuisson,
- une unité (6) de contrôle reliée à chaque zone (2, 3, 4, 5) de chauffage, et
- un dispositif (7) de communication relié à l'unité (6) de contrôle et apte à recevoir du ou des articles électroniques (20, 21, 22, 23) communicants ou encore d'un terminal de communication portable (50) :
- des signaux d'activation (SA) de l'unité (6) de contrôle,
- des signaux de commande (SCO) de la puissance de chauffage de la zone (2, 3, 4, 5) de chauffage une fois qu'un article électronique (20, 21, 22, 23) communicant est détecté et appairé avec ladite zone (2, 3, 4, 5) de chauffage, ou
- des signaux de confirmation (SC) de l'appairage qui indiquent qu'un flux magnétique généré par une zone (2, 3, 4, 5) de chauffage est bien détecté par un article électronique (20, 21, 22, 23) communicant ;
le ou les articles électroniques (20, 21, 22, 23) de cuisson communicant comprenant une unité (26) de traitement du signal agencé pour générer l'au moins un signal d'activation (SA), le signal de confirmation (SC) et/ou le signal de commande (SCO), un dispositif (25) de mesure d'un champ magnétique relié à l'unité de traitement (26) et agencé pour générer le signal de confirmation (SC), et un module de communication (24) apte à communiquer avec le dispositif (7) de communication de la table de cuisson (1), où dans ledit système
l'unité (6) de contrôle présente un mode de fonctionnement dit de scrutation dans lequel toutes les zones (2, 3, 4, 5) de chauffage sont alimentées consécutivement pendant une durée déterminée (T0)
lorsque le dispositif (7) de communication réceptionne un signal d'activation (SA) ou
lorsque le dispositif (7) de communication ne réceptionne plus un signal de confirmation (SC) émis par un des un ou plusieurs articles électroniques (20, 21, 22, 23) de cuisson communicants,
ce mode de scrutation étant réalisé pendant une durée déterminée (T1) ou jusqu'à ce que l'unité (6) de contrôle reçoive un signal de confirmation (SC) de l'appairage entre un article électronique (20, 21, 22, 23) communicants et une des zones (2, 3, 4, 5) de chauffage.

2. Système de chauffage par induction selon la revendication 1 **caractérisée en ce que** les zones (2, 3, 4, 5) de chauffage sont identifiées de manière unique par l'unité (6) de contrôle au moyen d'un identifiant unique.

3. Système de chauffage par induction selon l'une des revendications précédentes **caractérisée en ce que** chaque zone (2, 3, 4, 5) de chauffage comprend un capteur (8, 9, 10, 11) de présence d'un article électronique (20, 21, 22, 23) de cuisson communicant, ledit capteur (8, 9, 10, 11) étant positionné sur ou à proximité immédiate de ladite zone (2, 3, 4, 5) de chauffage et ce capteur (8, 9, 10, 11) de présence peut être un détecteur infrarouge, un capteur à effet Hall ou un détecteur capacitif relié à l'unité (6) de contrôle de la table (1) de cuisson et ces capteurs (8, 9, 10, 11) de présence peuvent générer un signal d'activation (SA).

4. Système de chauffage par induction selon l'une des revendications précédentes **caractérisée en ce que** les zones (2, 3, 4, 5) de chauffage comprennent des bobines (12) primaires et/ou des bobines (13) secondaires et au moins les bobines (12) primaires sont agencés pour générer un signal d'activation (SA) lorsqu'elles détectent une variation de charge d'une zone (2, 3, 4, 5) de chauffage.

5. Système de chauffage par induction selon l'une des revendications précédentes **caractérisée en ce qu'**elle comprend un dispositif (15) de contrôle qui permet de piloter la puissance de chauffe de chaque zone (2, 3, 4, 5), ledit dispositif (15) de contrôle étant agencé pour générer un signal d'activation (SA).

6. Système de chauffage par induction selon l'une des revendications précédentes **caractérisée en ce que** l'unité (6) de contrôle est programmable à distance, notamment par le terminal de communication portable (50).

7. Système de chauffage par induction selon l'une des revendications précédentes **caractérisé en ce que** l'article électronique (20, 21, 22, 23) de cuisson communicant comprend un dispositif de mise sous tension (27) de l'unité (26) de traitement du signal et/ou du module (24) de communication et au moins la mise sous tension de l'unité (26) de traitement du signal et/ou du module (24) de communication permet de générer un signal ponctuel d'activation (SA).

8. Système de chauffage par induction selon l'une des revendications précédentes **caractérisé en ce que** le signal de confirmation (SC) est généré lorsqu'au moins l'unité (26) de traitement du signal et/ou le module (24) de communication est sous tension et au moins le dispositif (25) de mesure du champ magnétique détecte un champ magnétique proche.

9. Système de chauffage par induction selon l'une des revendications précédentes **caractérisé en ce que** le signal de confirmation (SC) est émis de façon continue ou périodique tant que le dispositif (25) de mesure du champ magnétique détecte un champ magnétique proche.

10. Système de chauffage par induction selon l'une des revendications précédentes **caractérisé en ce qu'**il comprend une unité de commande (28) reliée à l'unité (26) de traitement et agencé pour générer des signaux de commande (SCO).

11. Système de chauffage par induction selon la revendication 10 **caractérisé en ce que** l'unité de commande (28) est programmable sans fil et à distance.

12. Procédé pour la cuisson contrôlée des aliments mettant en œuvre un système selon l'une des revendications précédentes **caractérisé en ce que** le procédé comprend les étapes suivantes :
une étape (100) de mise sous tension de la table (1) de cuisson ;
une étape (101) de mise sous tension d'au moins un article électronique (20, 21, 22, 23) de cuisson communicant ;
une étape (101a) de génération d'un signal d'activation (SA) qui active l'unité (6) de contrôle ;
une étape (102) de scrutation des différentes zones (2, 3, 4, 5) de chauffage et qui consiste à ce que l'unité (6) de contrôle alimente consécutivement toutes les zones (2, 3, 4, 5) de chauffage pendant une durée T0, l'étape (102) de scrutation se produisant pendant une durée T1 avant de prendre fin ;
une étape (103) où un signal de confirmation (SC) est continûment ou périodiquement généré si un des articles électroniques (20, 21, 22, 23) de cuisson communicant est positionné sur une des zones (2, 3, 4, 5) de chauffage pendant l'étape de scrutation (102) ;
une étape (103) de réception par la table (1) de cuisson du signal de confirmation (SC) et une étape d'appairage (104) de l'article électronique (20, 21, 22, 23) de cuisson communicant générateur du signal de confirmation (SC) avec ladite zone (2, 3, 4, 5) de chauffage alimentée ;
une étape (105) d'alimentation en continue des bobines (12) primaires de la zone (2, 3, 4, 5) de chauffage appairée suivant une consigne de chauffe provenant de l'article électronique (20, 21, 22, 23) de cuisson communicant ou de la table (1) de cuisson ou encore du signal de commande (SCO) ;
et une étape qui consiste à réitérer au moins les étapes précédentes de scrutation, d'appairage et d'alimentation lorsque la table (1) de cuisson réceptionne un nouveau signal d'activation (SA) et/ou lorsque la table ne réceptionne plus le signal de confirmation (SC) d'un article électronique (20, 21, 22, 23) de cuisson appairé.

## Patentansprüche

1. System zum Induktionsheizen, umfassend ein Kochfeld (1) und einen oder mehrere kommunizierende elektronische Kochartikel (20, 21, 22, 23), die geeignet sind, mit dem Kochfeld (1) zu kommunizieren,
wobei das Kochfeld (1) umfasst:
- mindestens zwei Zonen (2, 3, 4, 5) zum Induktionsheizen, die geeignet sind, einen oder mehrere mit dem Kochfeld kommunizierende elektronische Kochartikel (20, 21, 22, 23) zu tragen,
- eine Steuereinheit (6), die mit mindestens zwei Heizzonen (2, 3, 4, 5) verbunden ist, und
- eine Kommunikationsvorrichtung (7), die mit der Steuereinheit (6) verbunden ist und geeignet ist, von dem oder den kommunizierenden elektronischen Artikeln (20, 21, 22, 23) oder auch einem tragbaren Kommunikationsendgerät (50) zu empfangen:
- Aktivierungssignale (SA) der Steuereinheit (6);
- Befehlssignale (SCO) der Heizleistung der Heizzone (2, 3, 4, 5), sobald ein kommunizierender elektronischer Artikel (20, 21, 22, 23) erfasst und mit der Heizzone (2, 3, 4, 5) gepaart wurde, oder
- Bestätigungssignale (SC) der Paarung, die anzeigen, dass ein magnetischer Fluss, der von der Heizzone (2, 3, 4, 5) erzeugt wurde, von einem kommunizierenden elektronischen Artikel (20, 21, 22, 23) gut erfasst wurde;
wobei der oder die kommunizierenden elektronischen Kochartikel (20, 21, 22, 23) eine Signalverarbeitungseinheit (26), die eingerichtet ist, mindestens ein Aktivierungssignal (SA), das Bestätigungssignal (SC) und/oder das Befehlssignal (SCO) zu erzeugen, eine Messvorrichtung (25) eines magnetischen Felds, die mit der Verarbeitungseinheit (26) verbunden ist und eingerichtet ist, um das Bestätigungssignal (SC) zu erzeugen, und ein Kommunikationsmodul (24) umfassen, das geeignet ist mit der Kommunikationsvorrichtung (7) des Kochfelds (1) zu kommunizieren;
wobei in dem System die Steuereinheit (6) einen Betriebsmodus, der Prüfmodus genannt wird, vorweist, in dem alle Heizzonen (2, 3, 4, 5) nacheinander während einer vorbestimmten Dauer (T0) versorgt werden,
wenn die Kommunikationsvorrichtung (7) ein Aktivierungssignal (SA) empfängt, oder
wenn die Kommunikationsvorrichtung (7) nicht mehr ein Bestätigungssignal (SC) empfängt, das von einem des einen der der mehreren kommunizierenden elektronischen Kochartikeln (20, 21, 22, 23) ausgesendet wurde,
wobei dieser Prüfmodus während einer vorbestimmten Dauer (T1) realisiert wird, oder bis die Steuereinheit (6) ein Bestätigungssignal (SC) der Paarung zwischen dem kommunizierenden elektronischen Artikel (20, 21, 22, 23) und einer der Heizzonen (2, 3, 4, 5) empfängt.

2. System zum Induktionsheizen nach Anspruch 1, **dadurch gekennzeichnet, dass** die Heizzonen (2, 3, 4, 5) von der Steuereinheit (6) mittels einer eindeutigen Kennung eindeutig identifiziert werden.

3. System zum Induktionsheizen nach einem der vostehenden Ansprüche, **dadurch gekennzeichnet, dass** jede Heizzone (2, 3, 4, 5) einen Sensor (8, 9, 10, 11) für die Anwesenheit eines kommunizierenden elektronischen Kochartikels (20, 21, 22, 23) umfasst, wobei der Sensor (8, 9, 10, 11) auf oder in unmittelbarer Nähe von der Heizzone (2, 3, 4, 5) positioniert ist, und wobei dieser Sensor (8, 9, 10, 11) für die Anwesenheit ein Infrarotdetektor, ein Hall-Effekt-Sensor oder ein kapazitiver Detektor sein kann, der mit der Steuereinheit (6) des Kochfelds (1) verbunden ist, und wobei diese Sensoren (8, 9, 10, 11) für die Anwesenheit ein Aktivierungssignal (SA) erzeugen können.

4. System zum Induktionsheizen nach einem der vostehenden Ansprüche, **dadurch gekennzeichnet, dass** die Heizzonen (2, 3, 4, 5) Primärspulen (12) und/oder Sekundärspulen (13) umfassen, und dass mindestens die Primärspulen (12) eingerichtet sind, ein Aktivierungssignal (SA) zu erzeugen, wenn sie eine Lastvariation einer Heizzone (2, 3, 4, 5) erfassen.

5. System zum Induktionsheizen nach einem der vostehenden Ansprüche, **dadurch gekennzeichnet, dass** es eine Steuervorrichtung (15) umfasst, die es ermöglicht, die Heizleistung von jeder Zone (2 3, 4, 5) zu lenken, wobei die Steuervorrichtung (15) eingerichtet ist, ein Aktivierungssignal (SA) zu erzeugen.

6. System zum Induktionsheizen nach einem der vostehenden Ansprüche, **dadurch gekennzeichnet, dass** die Steuereinheit (6) insbesondere durch das tragbare Kommunikationsendgerät (50) fernprogrammierbar ist.

7. System zum Induktionsheizen nach einem der vostehenden Ansprüche, **dadurch gekennzeichnet, dass** der kommunizierende elektronische Kochartikel (20, 21, 22, 23) eine Vorrichtung zum Anlegen einer Spannung (27) an die Signalverarbeitungseinheit (26) und/oder das Kommunikationsmodul (24) umfasst, und wobei zumindest das Anlegen einer Spannung an die Signalverarbeitungseinheit (26) und/oder das Kommunikationsmodul (24) ermöglicht, ein punktuelles Aktivierungssignal (SA) zu erzeugen.

8. System zum Induktionsheizen nach einem der vostehenden Ansprüche, **dadurch gekennzeichnet, dass** das Bestätigungssignal (SC) erzeugt wird, wenn mindestens am dem Signalverarbeitungseinheit (26) und/oder dem Kommunikationsmodul (24) eine Spannung anliegt und mindestens die Messvorrichtung (25) des magnetischen Felds ein nahes Magnetfeld erfasst.

9. System zum Induktionsheizen nach einem der vostehenden Ansprüche, **dadurch gekennzeichnet, dass** das Bestätigungssignal (SC) kontinuierlich oder periodisch ausgesendet wird, solange die Messvorrichtung (25) des magnetischen Felds ein nahes Magnetfeld erfasst.

10. System zum Induktionsheizen nach einem der vostehenden Ansprüche, **dadurch gekennzeichnet, dass** es eine Befehlseinheit (28) umfasst, die mit der Verarbeitungseinheit (26) verbunden ist und eingerichtet ist, um Befehlssignale (SCO) zu erzeugen.

11. System zum Induktionsheizen nach Anspruch 10, **dadurch gekennzeichnet, dass** die Befehlseinheit (28) drahtlos und fernprogrammierbar ist.

12. Verfahren zum kontrollierten Kochen von Lebensmitteln unter Verwendung eines Systems nach einem der vostehenden Ansprüche, **dadurch gekennzeichnet, dass** das Verfahren die folgenden Schritte umfasst:
- einen Schritt (100) zum Anlegen einer Spannung an das Kochfeld (1);
- einen Schritt (101) zum Anlegen einer Spannung an mindestens einem kommunizierenden elektronischen Kochartikel (20, 21, 22, 23);
- einen Schritt (101a) zum Erzeugen eines Aktivierungssignals (SA), das die Steuereinheit (6) aktiviert;
- einen Schritt (102) zum Prüfen der verschiedenen Heizzonen (2, 3, 4, 5), der darin besteht, dass die Steuereinheit (6) nacheinander alle Heizzonen (2, 3, 4, 5) während einer Dauer T0 versorgt, wobei der Schritt (102) zum Prüfen für eine Dauer T1 vor dem Beenden auftritt;
- einen Schritt (103), in dem ein Bestätigungssignal (SC) kontinuierlich oder periodisch erzeugt wird, wenn einer der kommunizierenden elektronischen Kochartikel (20, 21, 22, 23) auf einer der Heizzonen (2, 3, 4, 5) während des Schritts (102) zum Prüfen positioniert ist;
- einen Schritt (103) zum Empfangen des Bestätigungssignals (SC) durch das Kochfeld (1) und einen Schritt des Paarens (104) des kommunizierenden elektronischen Kochartikels (20, 21, 22, 23), der das Bestätigungssignal (SC) erzeugt, mit der versorgten Heizzone (2, 3, 4, 5);
- einen Schritt (105) zum kontinuierlichen Versorgen der Primärspulen (12) der Heizzone (2, 3, 4, 5), die nach einer Heizanweisung gepaart ist, die von dem kommunizierenden elektronischen Kochartikel (20, 21, 22, 23) oder von dem Kochfeld (1) oder auch von dem Befehlssignal (SCO) stammt;
und einen Schritt, der darin besteht, mindestens die vorherigen Schritte des Prüfens, Paarens und Versorgens zu wiederholen, wenn die Kochplatte (1) ein neues Aktivierungssignal (SA) empfängt und/oder wenn die Kochplatte das Bestätigungssignal (SC) eines gepaarten elektronischen Kochartikels (20, 21, 22, 23) nicht mehr empfängt.

## Claims

1. Induction heating system comprising a hotplate (1) and one or more electronic items (20, 21, 22, 23) for communicative cooking able to communicate with the hotplate (1),
the hotplate (1) comprising:
- at least two induction heating zones (2, 3, 4, 5) for supporting one or more electronic items (20, 21, 22, 23) communicating with the hotplate,
- a control unit (6) connected to each heating zone (2, 3, 4, 5) and
- a communication device (7) connected to the control unit (6) and able to receive from the communicating electronic item or items (20, 21, 22, 23) or even from a portable communication terminal (50):
- activation signals (SA) of the control unit (6),
- control signals (SCO) of the heating power of the heating zone (2, 3, 4, 5) once a communicating electronic item (20, 21, 22, 23) is detected and paired with said heating zone (2, 3, 4, 5) or
- confirmation signals (SC) of the pairing which indicate that a magnetic flux generated by a heating zone (2, 3, 4, 5) has been detected by a communicating electronic item (20, 21, 22, 23);
the electronic item or items (20, 21, 22, 23) for communicative cooking comprising a unit (26) for processing the signal for generating the at least one activation signal (SA), the confirmation signal (SC) and/or the control signal (SCO), a device (25) for measuring a magnetic field connected to the processing unit (26) and arranged to generate the confirmation signal (SC) and a communication module (24) able to communicate with the communication device (7) of the hotplate (1);
where in said system the control unit (6) has a functioning mode referred to as scanning in which all of the heating zones (2, 3, 4, 5) are supplied consecutively for a defined period (T0)
when the communication device (7) receives an activation signal (SA) or
when the communication device (7) no longer receives a confirmation signal (SC) emitted by one of the one or more electrical items (20, 21, 22, 23) for communicative cooking,
this mode of scanning being performed during a defined period (T1) or until the control unit (6) receives a confirmation signal (SC) of the paring between a communicating electronic item (20, 21, 22, 23) and one of the heating zones (2, 3, 4, 5).

2. Induction heating system according to claim 1, **characterised in that** the heating zones (2, 3, 4, 5) are identified in a unique manner by the control unit (6) by means of a unique identifier.

3. Induction heating system according to any of the preceding claims, **characterised in that** each heating zone (2, 3, 4, 5) comprises a presence sensor (8, 9, 10, 11) of a electronic item (20, 21, 22, 23) for communicative cooking, said sensor (8, 9, 10, 11) being positioned on or in the immediate proximity of said heating zone (2, 3, 4, 5) and said presence sensor (8, 9, 10, 11) can be an infrared detector, a Hall effect sensor or a capacitive sensor connected to the control unit (6) of the hotplate (1) and said presence sensors (8, 9, 10, 11) can generate an activation signal (SA).

4. Induction heating system according to any of the preceding claims, **characterised in that** the heating zones (2, 3, 4, 5) comprise primary coils (12) and/or secondary coils (13) and at least the primary coils (12) are arranged to generate an activation signal (SA) when they detect a variation in the charge of a heating zone (2, 3, 4, 5).

5. Induction heating system according to any of the preceding claims, **characterised in that** it comprises a control device (15) which makes it possible to control the heating power of each zone (2, 3, 4, 5), said control device (15) being arranged to generate an activation signal (SA).

6. Induction heating system according to any of the preceding claims, **characterised in that** the control unit (6) can be programmed remotely, in particular by the portable communication terminal (50).

7. Induction heating system according to any of the preceding claims, **characterised in that** the communicative electronic cooking item (20, 21, 22, 23) comprises a device for powering (27) the processing unit (26) of the signal and/or communication module (24) and at least the powering of the processing unit (26) of the signal and/or of the communication module (24) makes it possible to generate a one-off activation signal (SA).

8. Induction heating system according to any of the preceding claims, **characterised in that** the confirmation signal (SC) is generated when at least the processing unit (26) of the signal and/or the communication module (24) is powered and at least the device (25) for measuring the magnetic field detects a close magnetic field.

9. Induction heating system according to any of the preceding claims, **characterised in that** the confirmation signal (SC) is emitted in a continuous or periodic manner provided that the device (25) for measuring the magnetic field detects a close magnetic field.

10. Induction heating system according to any of the preceding claims, **characterised in that** it comprises a control unit (28) connected to the processing unit (26) and arranged to generate control signals (SCO).

11. Induction heating system according to claim 10, **characterised in that** the control unit (28) can be programmed wirelessly and remotely.

12. Method for the controlled cooking of food using a system according to any of the preceding claims, **characterised in that** the method comprises the following steps:
a step (100) of powering the hotplate (1);
a step (101) of powering at least one electronic item (20, 21, 22, 23) for communicative cooking;
a step (101a) of generating an activation signal (SA) which activates the control unit (6);
a step (102) of scanning the different heating zones (2, 3, 4, 5) and which consists of the control unit (6) supplying consecutively all of the heating zones (2, 3, 4, 5) for a period T0, the scanning step (102) being performed during a period T1 before coming to an end;
a step (103) where a confirmation signal (SC) is generated continually or periodically if one of the electronic items (20, 21, 22, 23) for communicative cooking is positioned on one of the heating zones (2, 3, 4, 5) during the scanning step (102);
a step (103) of receiving via the hotplate (1) the confirmation signal (SC) and a step (104) of pairing the electronic item (20, 21, 22, 23) for communicative cooking generator of the confirmation signal (SC) with said supplied heating zone (2, 3, 4, 5);
a step (105) of continuously supplying the primary coils (12) of the paired heating zone (2, 3, 4, 5) according to a heat setting coming from the electronic item (20, 21, 22, 23) for communicative cooking or the hotplate (1) or even the control signal (SCO);
and a step which consists of repeating at least the preceding steps of scanning, pairing and supplying when the hotplate (1) receives a new activation signal (SA) and/or when the table no longer receives the confirmation signal (SC) of an electronic item (20, 21, 22, 23) of paired cooking.
